## Europäisches Patentamt
## European Patent Office
## Office européen des brevets

(19)

(11) Veröffentlichungsnummer: **0 038 038**
**A1**

(12) # EUROPÄISCHE PATENTANMELDUNG

(21) Anmeldenummer: 81102729.1

(22) Anmeldetag: 10.04.81

(51) Int. Cl.³: **B 65 D 85/67**, G 11 B 23/02

(30) Priorität: 15.04.80 DE 3014298

(43) Veröffentlichungstag der Anmeldung: **21.10.81**
**Patentblatt 81/42**

(84) Benannte Vertragsstaaten: **AT BE CH DE FR GB IT LI LU NL SE**

(71) Anmelder: **UNILEVER NV, Burgemeester 's Jacobplein 1, NL-3000 DK Rotterdam (NL)**
Anmelder: **UNILEVER PLC, Unilever House Blackfriars, London EC4 (GB)**

(72) Erfinder: **Detzel, Josef, Widdumring 4, D-8961 Weitnau (DE)**

(74) Vertreter: **Hutzelmann, Gerhard et al, Kronenstrasse 16, D-8960 Kempten (DE)**

(54) **Aufklappbare Verpackung.**

(57) Aufklappbare Verpackung, insbesondere für eine Tonbandkassette mit einem Unterteil (27), das aus Karton oder gespritztem Kunststoff bestehen kann und mit einem Deckelteil, welches ein Aufnahmefach für beispielsweise eine Tonbandkassette aufweist. Das Deckelteil ist aus einem Kartonzuschnitt hergestellt und als Faltschachtel ausgebildet. Es hat eine über die gesamte Oberfläche der Verpackung reichende Deckelfläche (4), an die eine Stirnwand, ein Boden sowie zwei Seitenwände angeformt sind. Die Seitenwände weisen Lager für die Klappverbindung mit dem Unterteil auf, die derart aussermittig angeordnet sind, dass die einander zugekehrten Kanten der Böden von Deckel- und Unterteil sich aneinander abstützen und so ein unbeabsichtigtes Öffnen der Verpackung verhindern.

EP 0 038 038 A1

COMPLETE DOCUMENT

ACTORUM AG

0038038

Unilever N.V.
Unilever Ltd.

## Aufklappbare Verpackung

Die Erfindung bezieht sich auf eine aufklappbare Verpackung, insbesondere für eine Tonbandkassette, mit einem schalenförmigen Unterteil und einem Deckelteil, das sich teilweise in den Bereich des Unterteils hinein erstreckt und ein Aufnahmefach aufweist, das von einer Deckelfläche, einem Boden, einer Stirnwand sowie zwei Seitenwänden begrenzt wird, wobei die Deckelfläche über wenigstens annähernd die eine gesamte Fläche der Verpackung reicht, während sich der Boden des Deckelteils und der Boden des Unterteils ergänzen und wobei die Seitenwände des Deckelteils Lager für die Klappverbindung mit dem Unterteil aufweisen.

Die Form und der Aufbau der dabei eingesetzten aufklappbaren Verpackung hat sich sowohl als Verkaufspackung als auch für die Aufbewahrung im häuslichen Bereich sehr bewährt. Sie ist jedoch in der Herstellung zu teuer.

Der Erfindung liegt die Aufgabe zugrunde, eine aufklappbare Verpackung der genannten Art zu schaffen, die einfach herstellbar und preisgünstig ist.

Diese Aufgabe wird erfindungsgemäß dadurch gelöst, daß wenigstens das Deckelteil aus einem Kartonzuschnitt hergestellt und als Faltschachtel ausgebildet ist, wobei an der Deckelfläche und am Boden beiderseits je eine Seitenwand angelenkt ist, von denen sich jeweils zwei im aufgerichteten Zustand des Deckelteils überdecken und damit die Deckelfläche und den Boden verbinden, und daß die Seitenwände miteinander fluchtende Lager bzw. Lageröffnungen für die Klappverbindung mit dem Unterteil aufweisen, wobei die Lager bzw. Lageröffnungen an Deckel- und Unterteil außermittig angeordnet sind, wodurch die einander zugekehrten Kanten der Böden des Unterteils und des Deckelteils sich aneinander abstützen.

Hierdurch wird neben der angestrebten äußerst wirtschaftlichen Herstellung der Verpackung erreicht, daß die aus Karton bestehenden Teile unmittelbar bedruckt werden können. Was zum einen ein besseres Aussehen der Verpackung ermöglicht und zum anderen die Verwendung von aufzuklebenden Etiketten erübrigt. Das gegenseitige Abstützen verhindert ein ungewolltes Öffnen der aufklappbaren Verpackung selbst dann, wenn sie mit dem Deckelteil nach unten gehalten wird und das verpackte Gut gegen den Deckel drückt. Ein Öffnen der Verpackung wird erst durch einen Druck auf den Boden des Deckelteils möglich, wobei dessen Kante an der Kante des Bodens des Unterteils vorbeigleiten kann.

Ebenfalls sehr vorteilhaft ist es, wenn gemäß der Erfindung an einer die Stirnwand des Deckelteils bildenden rechteckigen Fläche über eine Biegelinie eine Deckelfläche angelenkt ist, mit der über eine weitere Biegelinie eine Verstärkungsfläche verbunden ist, an der über eine dritte Biegelinie eine Verdoppelungsfläche für die Stirnwand angeordnet ist, wobei an den beiden freien Kanten der Deckelfläche je eine mit einer Lageröffnung versehene Seitenwand angelenkt ist, und wenn weiter an der der ersten Biegelinie gegenüberliegenden, durch eine vierte Biegelinie gebildeten Kante der Stirnwand eine den Boden des Deckelteils bildende Fläche angeordnet ist, an welcher an der gegenüberliegenden Seite eine Doppelfläche und an den beiden freien Kanten Seitenwände mit Lageröffnungen angelenkt sind.

Hierdurch ist es möglich, aus einem verhältnismäßig einfach aufgebauten und flachliegenden Kartonzuschnitt das Deckelteil einer aufklappbaren Verpackung zu bilden.

Gemäß der Erfindung liegt eine vorteilhafte Lösung auch darin, daß das Deckelteil aus einer Deckelfläche, einer Stirnwand, einem Boden sowie Seitenwänden besteht, die aus einem flachliegenden Kartonzuschnitt gebildet sind und die durch Umfalten um jeweils 90° um die die einzelnen Flächen miteinander verbindenden Biegelinien in die fertige Form des Deckelteils gebracht sind, wobei die Seitenwände Lageröffnungen zum Verbinden des Deckelteils mit dem Verpackungs-Unterteil aufweisen und untereinander durch Kleben, Siegeln oder dgl. verbunden sind.

In der Zeichnung ist ein Ausführungsbeispiel der Erfindung dargestellt. Dabei zeigen:

Fig. 1  einen flachliegenden Kartonzuschnitt zum Bilden des Deckelteils der aufklappbaren Verpackung, wobei an die einzelnen Flächen Verstärkungsflächen angeformt sind;

Fig. 2  einen ebenfalls flachliegenden Kartonzuschnitt, bei dem die Verstärkungsflächen bis zur Auflage an den zu verstärkenden Flächen umgelegt sind;

Fig. 3  ein fertig aufgerichtetes Deckelteil der Verpackung;

Fig. 4  eine vollständige Verpackung mit Deckel- und Unterteil in geöffnetem Zustand;

Fig. 5  die vollständige Verpackung gemäß Fig. 4 in geschlossenem Zustand mit dem Deckelteil an der Unterseite, jedoch im Längsschnitt dargestellt, und

Fig. 6  die vollständige Verpackung in geöffnetem Zustand, wobei der Öffnungswinkel 180° beträgt, ebenfalls im Längsschnitt.

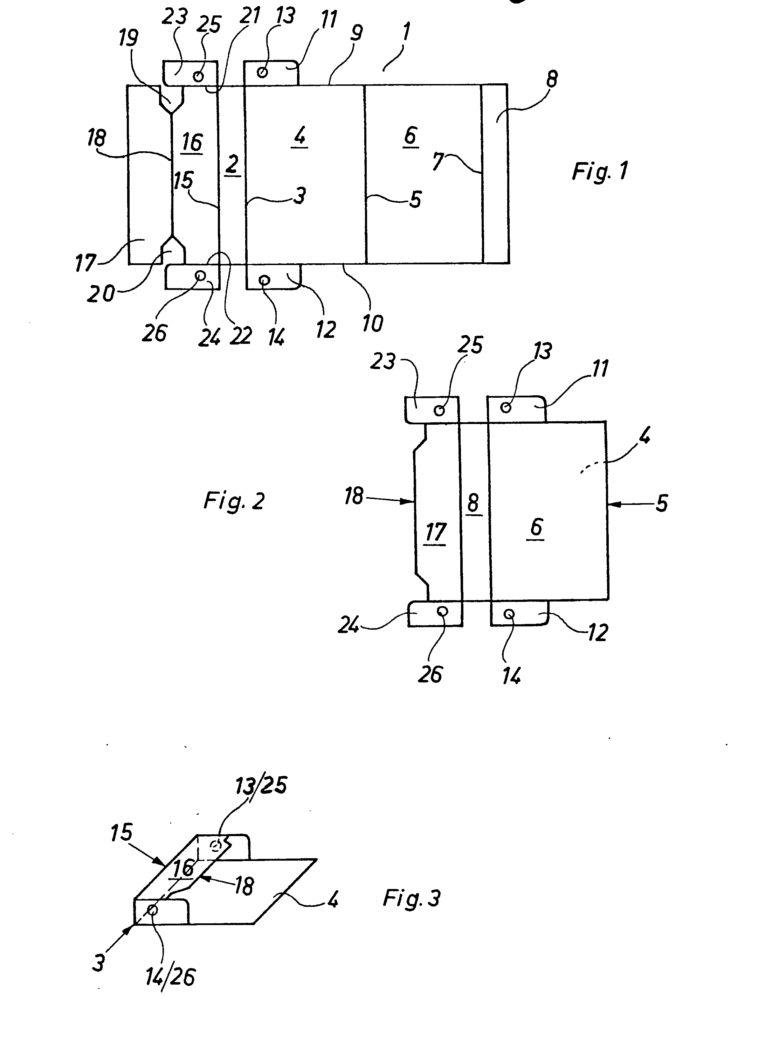

Mit 1 ist in Fig. 1 ein Kartonzuschnitt bezeichnet, der mit einer rechteckigen Fläche zur Bildung einer Stirnwand 2 versehen ist. Über eine Biegelinie 3 ist an diese Stirnfläche eine Deckelfläche 4 angelenkt. An ihrer von der Stirnfläche 2 abgewandten Seite ist die Deckelfläche 4 über eine weitere Biegelinie 5 mit einer Verstärkungsfläche 6 verbunden, an der über eine dritte Biegelinie 7 eine Verdoppelungsfläche 8 für die Stirnwand angeordnet ist. An den einander gegenüberliegenden freien Kanten 9 und 10 der Deckelfläche 4 ist je eine Seitenwand 11, 12 angeformt, wobei die Kanten 9, 10 im Bereich dieser beiden Seitenwände als Biegelinien ausgebildet sind. Die Höhe der Seitenwände entspricht der Breite der Stirnwand 2. Beide Seitenwände 11, 12 sind mit Lageröffnungen 13, 14 versehen, die geringfügig außerhalb der Mitte der Seitenwände angeordnet sind.

Die der Biegelinie 3 gegenüberliegende Begrenzungslinie der Stirnwand 2 ist ebenfalls als Biegelinie 15 ausgebildet und dient der gelenkigen Verbindung der Stirnwand mit einem Boden 16, an dem wiederum gelenkig eine Doppelfläche 17 angeordnet ist. Mit dieser gelenkigen Verbindung zwischen Boden 16 und Doppelfläche 17 wird beim Umfalten eine Kante 18 gebildet, auf die später noch einzugehen sein wird. Beim dargestellten Ausführungsbeispiel ist durch Aussparungen 19 und 20 im Boden 16 und der Doppelfläche 17 die Kante 18 kürzer als die entsprechenden Biegelinien 15, 3, 5 und 7. Auch die beiden anderen Begrenzungslinien 21, 22 des Bodens 16 sind biegbar ausgebildet und dienen der Anlenkung von weiteren Seitenwänden 23, 24, die ebenfalls mit Lageröffnungen 25 und 26 versehen sind. Diese Lageröffnungen 25 bzw. 26 sind innerhalb der Mitte der Seitenwände 23, 24 angeordnet und zwar um das gleiche Maß von der Mitte versetzt wie die Lageröffnungen 13 und 14. In ihren Abmessungen sind alle Lageröffnungen gleich.

In Fig. 2 ist die Verstärkungsfläche 6 mit der an ihr angelenkten Verdoppelungsfläche 8 um die Biegelinie 5 um 180° umgefaltet und mit der Dekkelfläche 4 bzw. der Stirnwand 2 durch Ankleben verbunden. Desgleichen
ist die Doppelfläche 17 auf den Boden 16 aufgefaltet und geklebt, wodurch
die Kante 18 frei ist.

In Fig. 3 sind die Seitenwände 11, 12, 23 und 24 und die Deckelfläche 4
sowie der Boden 16 um jeweils 90° umgebogen, so daß die Seitenwände 11
und 23 bzw. 12 und 24 aufeinanderliegen und durch Kleben oder dgl. fest
miteinander verbunden sind. Die Lageröffnungen 13 und 25 bzw. 14 und 26
fluchten dabei miteinander. Das so fertiggestellte Deckelteil ist in Fig.
4 mit einem aus Kunststoff gespritzten Unterteil 27 verbunden. Das Unterteil 27 enthält Lagerzapfen 28, 29, die in die Lageröffnungen 13, 25 bzw.
14, 26 eingreifen und damit eine gelenkige Verbindung zwischen Deckelteil
und Unterteil 27 bilden.

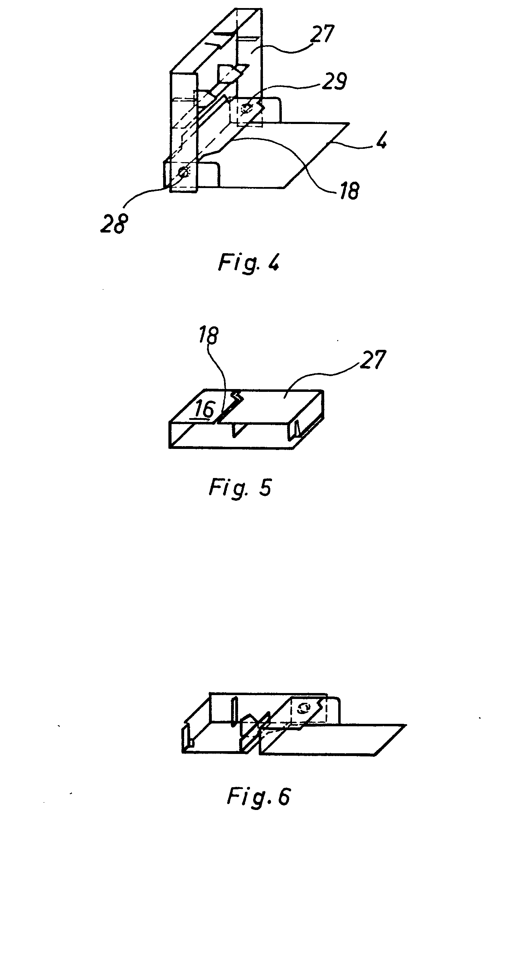

In Fig. 5 ist die Verpackung in geschlossenem Zustand dargestellt, wobei
die Verpackung so gedreht ist, daß der Boden 16 des Deckelteils nach oben
zeigt, um die Funktion der Kante 18 zu zeigen.

Die Lagerzapfen 28, 29 sind genauso wie die Lageröffnungen etwas gegen
den Boden 16 des Deckelteils hin verschoben. Die Kante 18 des Bodens 16
stößt dadurch beim Öffnen der Verpackung gegen eine Gegenkante 30 am Boden des Unterteils 27, wodurch ein Öffnen verhindert wird. Aufgrund der
Herstellung des Deckelteils aus einem Kartonzuschnitt ist es jedoch möglich, durch Druck auf den Boden 16 die Kante 18 nach innen zu biegen und
damit ein Öffnen der Verpackung zu ermöglichen. Durch die Elastizität des
Kartonmaterials kehrt der Boden 16 beim Nachlassen des Druckes in seine
ursprüngliche Form zurück, wodurch die Kante 18 beim Schließen der Verpackung wieder hinter der entsprechenden Gegenkante 30 einrastet.

Durch diese außermittige Lagerung wird darüber hinaus erreicht, daß sich
beim Öffnen der Verpackung die Stirnwand 2 gegen die Gegenkante 30 legt
und damit ein über 180° hinausgehendes Öffnen verhindert (Fig. 6).

0038038

Unilever N.V.
Unilever Ltd.

## Patentansprüche

1. Aufklappbare Verpackung, insbesondere für eine Tonbandkassette, mit einem schalenförmigen Unterteil und einem Deckelteil, das sich teilweise in den Bereich des Unterteils hinein erstreckt und ein Aufnahmefach aufweist, das von einer Deckelfläche (4), einem Boden (16), einer Stirnwand (2) sowie zwei Seitenwänden begrenzt wird, wobei die Deckelfläche (4) über wenigstens annähernd die eine gesamte Fläche der Verpackung reicht, während sich der Boden (16) des Deckelteils und der Boden des Unterteils (27) ergänzen, und wobei die Seitenwände des Deckelteils Lager (13,14,25,26) für die Klappverbindung mit dem unterteil aufweisen, dadurch gekennzeichnet, daß wenigstens das Deckelteil aus einem Kartonzuschnitt (1) hergestellt und als Faltschachtel ausgebildet ist, wobei an der Deckelfläche (4) und am Boden(16) beiderseits je eine Seitenwand (11,12,23,24) angelenkt ist, von denen sich jeweils zwei in aufgerichtetem Zustand des Deckelteils überdecken und damit die Deckelfläche und den Boden verbinden, und daß die Seitenwände miteinander fluchtende Lager bzw. Lageröffnungen (13,14,25,26) für die Klappverbindung mit dem Unterteil (27) aufweisen, wobei die Lager bzw. Lageröffnungen (13,14,25,26,28,29) an Deckel- und Unterteil außermittig angeordnet sind, wodurch die einander zugekehrten Kanten (18,30) der Böden des Unterteils und des Deckelteils sich aneinander abstützen.

2. Aufklappbare Verpackung nach Anspruch 1, dadurch gekennzeichnet, daß an einer die Stirnwand (2) des Deckelteils bildenden rechteckigen Fläche über eine Biegelinie (3) eine Deckelfläche (4) angelenkt ist, mit der über eine weitere Biegelinie (5) eine Verstärkungsfläche (6) verbunden ist, an der über eine dritte Biegelinie (7) eine Verdoppelungsfläche (8) für die Stirnwand (2) angeordnet ist, wobei an den beiden freien Kanten der Deckelfläche je eine mit einer Lageröffnung (13,14) versehene Seitenwand (11,12) angelenkt ist, und daß an der der ersten Biegelinie (3) gegenüberliegenden, durch eine vierte Biegelinie (15) gebildeten Kante der Stirnwand (2) eine den Boden (16) des Deckelteils bildende Fläche angeordnet ist, an welcher an der gegenüberliegenden Seite eine Doppelfläche (17) und an den beiden freien Kanten Seitenwände (23,24) mit Lageröffnungen (25,26) angelenkt sind.

3. Aufklappbare Verpackung nach Anspruch 1 oder 2, dadurch gekennzeichnet, daß das Deckelteil aus einer Deckelfläche (4), einer Stirnwand (2), einem Boden (16) sowie Seitenwänden (11,12,23,24) besteht, die aus einem flachliegenden Kartonzuschnitt (1) gebildet sind und die durch Umfalten um jeweils 90° um die die einzelnen Flächen miteinander verbindenden Biegelinien (3,15) in die fertige Form des Deckelteils gebracht sind, wobei die Seitenwände Lageröffnungen (13,14,25, 26) zum Verbinden des Deckelteils mit dem Verpackungs-Unterteil (27) aufweisen und untereinander durch Kleben, Siegeln oder dgl. verbunden sind.

½    0038039

Fig. 1

Fig. 2

Fig. 3

0038038

Fig. 4

Fig. 5

Fig. 6

| Kategorie | EINSCHLÄGIGE DOKUMENTE |  | KLASSIFIKATION DER ANMELDUNG (Int. Cl.³) |
|---|---|---|---|
|  | Kennzeichnung des Dokuments mit Angabe, soweit erforderlich, der maßgeblichen Teile | betrifft Anspruch |  |
| X | US - A - 3 978 985 (ZINNBAUER) <br> + Gesamt + <br> -- | 1,3 | B 65 D 85/67 <br><br> G 11 B 23/02 |
| A | FR - A - 1 366 402 (PHILIPS) <br> ---- |  |  |

**RECHERCHIERTE SACHGEBIETE (Int. Cl.³)**

B 65 D 6/00

B 65 D 85/00

G 11 B 23/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 01-07-1981 | JANC |

EPA form 1503.1   06.78